# EUROPEAN PATENT APPLICATION

(11) **EP 2 749 178 A1**
(43) Date of publication of application: **02.07.2014**
(21) Application number: 13197149.1
(22) Date of filing: 13.12.2013
(51) Int. Cl.: A23D 9/007, C11B 5/00

(54) **Antioxidant for oils and fats**

(30) Priority: 27.12.2012 JP 2012284092
(71) Applicant: Tsuji Oil Mill Co., Ltd., 515-2314 Mie Matsusaka-shi (JP)
(72) Inventor: Hayashi, Akihito, Mie, 515-2314 (JP); Hamaguchi, Nobutoshi, Mie, 515-2314 (JP)
(74) Representative: Witte, Weller & Partner Patentanwälte mbB

(57) **Abstract**

[PROBLEM] To provide an antioxidant comprising a ginger oil, the antioxidant having a higher unpleasant odor masking effect and a higher inhibitory effect on the increase in peroxide value than those of ginger oils produced by a steam distillation method.

[SOLUTION] An antioxidant for an oil or fat or a complex lipid comprises a ginger oil, and the ginger oil has at least one peak detected within 5 minutes before a peak of neral and has at least three peaks within 7 minutes after a peak of geranial when subjected to a high-performance liquid chromatographic analysis in the following analysis conditions:
sample: an ethanol containing 0.1% (w/v) of the ginger oil,
column: an ODS column having a particle size of 5 µm, an inner diameter of 4.6 mm, and a length of 250 mm),
column oven temperature: 40°C,
detection wavelength: 228 nm,
mobile phase: water (liquid A), acetonitrile (liquid B),
flow rate: 1 mL/min, and
gradient program:
(1) initial condition: 70% liquid A/30% liquid B;
(2) 0 min to 20 min: linear gradient from the initial condition to 10% liquid A/90% liquid B; and
(3) 20 min to 40 min: maintaining 10% liquid A/90% liquid B.

## Description

### Technical Field

The present invention relates to an antioxidant for oils and fats or complex lipids such as phospholipids, an oil or fat composition or a complex lipid composition comprising the antioxidant, and a method for preventing oxidation of an oil or fat composition or a complex lipid composition.

### Background Art

Oils and fats are oxidized by, for example, heat, light, or oxygen to discolor or to generate an oxidized odor. The oxidized lipid not only has inferior color tone and flavor but is also considered to have adverse effects on health. In recent years, highly unsaturated fatty acids (a fatty acid having three or more double bonds) typified by linolenic acid, eicosapentaenoic acid (EPA), docosahexaenoic acid (DHA), and arachidonic acid (AA) have been known to have excellent physiological activities, and oils and fats containing a large amount of the highly unsaturated fatty acid, typified by a fish oil, should be more actively used as edible oils and fats. However, the oil or fat containing such a highly unsaturated fatty acid is readily oxidized to generate a characteristic unpleasant odor or to deteriorate in flavor, resulting in the limited usage in or processing to food products.

To prevent the oxidation of oils and fats, the addition of a synthetic antioxidant such as butylated hydroxyanisole (BHA) has been known to be effective. However, the synthetic antioxidant involves safety concerns. In consideration of the recent tastes of customers, there is a demand for the use of a substance derived from a natural product in place of a chemically synthesized substance. The antioxidant derived from natural products typically includes tocopherol and ascorbic acid. In addition, a green tea extract is also known to have the antioxidant activity.

Ginger is a food material used as a spice and has been used as a crude drug having the functions of warming the body and increasing metabolism since a long time ago. Patent Literature 1 discloses that a ginger oil effectively masks unpleasant odor derived from an aquatic animal oil or fat, but the ginger oils used therein were those produced by a steam distillation method.

### Citation List

### Patent Literature

Patent Literature 1: Japanese Patent Application Publication No. 2001-131575

### Summary of Invention

### Technical Problem

The present invention has an object to provide a natural product-derived antioxidant having a higher inhibitory action on the increase in peroxide value than that of known natural product-derived antioxidants and having a higher masking action on an unpleasant odor than that of ginger oils produced by a steam distillation method.

### Solution to Problem

In order to solve the problems, the present invention encompasses the inventions below.
[1] An antioxidant for an oil or fat or a complex lipid, the antioxidant comprising a ginger oil, the ginger oil having at least one peak detected within 5 minutes before a peak of neral and having at least three peaks within 7 minutes after a peak of geranial when subjected to a high-performance liquid chromatographic analysis in the following analysis conditions:
   sample: an ethanol containing 0.1% (w/v) of the ginger oil,
   column: an ODS column having a particle size of 5 µm, an inner diameter of 4.6 mm, and a length of 250 mm,
   column oven temperature: 40°C,
   detection wavelength: 228 nm,
   mobile phase: water (liquid A), acetonitrile (liquid B),
   flow rate: 1 mL/min, and
   gradient program:
      (1) initial condition: 70% liquid A/30% liquid B;
      (2) 0 min to 20 min: linear gradient from the initial condition to 10% liquid A/90% liquid B; and
      (3) 20 min to 40 min: maintaining 10% liquid A/90% liquid B.
[2] The antioxidant according to the above [1] having a masking action on an unpleasant odor of an oil or fat or a complex lipid.
[3] The antioxidant according to the above [1] or [2], wherein the ginger oil is produced by a hexane extraction method.
[4] An oil or fat composition comprising the antioxidant according to any one of the above [1] to [3].
[5] A complex lipid composition comprising the antioxidant according to any one of the above [1] to [3].
[6] A method for preventing oxidation of an oil or fat composition or a complex lipid composition, the method comprising adding the antioxidant according to any one of the above [1] to [3] to an oil or fat composition or a complex lipid composition.
[7] The method for preventing oxidation according to the above [6], wherein 0.01 to 25 parts by weight of the ginger oil is added to 100 parts by weight of an oil or fat or a complex lipid.

### Effect of the Invention

The present invention can provide a natural product-derived antioxidant having a higher inhibitory action on the increase in peroxide value than that of a known natural product-derived antioxidant and having a higher masking action on an unpleasant odor than that of ginger oils produced by a steam distillation method.

### Brief Description of Drawings

FIG. 1 shows the HPLC analysis results of an in-house ginger oil produced by a hexane extraction method.
FIG. 2 shows the HPLC analysis results of a Shimanto ginger essential oil (trade name, manufactured by ECO-SHIMANTO, produced by a steam distillation method).

### Description of Embodiments

An antioxidant for an oil or fat or a complex lipid of the present invention is characterized by comprising a ginger oil. The ginger oil means a natural essential oil obtained from the rhizomes of ginger (*Amomum zingiber* L.) belonging to the genus *Amomum,* the family *Zingiberaceae.* The natural essential oil contains various constituents exemplified by aromatic volatile oil constituents such as zingiberene, zingiberol, camphene, cineole, linalool, and citral and pungent constituents such as zingerol, zingerone, and shogaol.

The ginger oil used in the antioxidant of the present invention has at least one peak detected within 5 minutes before a peak of neral and at least three peaks within 7 minutes after a peak of geranial when subjected to a high-performance liquid chromatographic (hereinafter referred to as "HPLC") analysis in the following analysis conditions.

### <HPLC analysis conditions>

Sample: an ethanol containing 0.1% (w/v) of the ginger oil
Column: an ODS column having a particle size of 5 µm, an inner diameter of 4.6 mm, and a length of 250 mm
Column oven temperature: 40°C
Detection wavelength: 228 nm
Mobile phase: water (liquid A), acetonitrile (liquid B)
Flow rate: 1 mL/min
Gradient program:
   (1) initial condition: 70% liquid A/30% liquid B;
   (2) 0 min to 20 min: linear gradient from the initial condition to 10% liquid A/90% liquid B
   (3) 20 min to 40 min: maintaining 10% liquid A/90% liquid B

The sample is prepared using ethanol (guaranteed reagent).

The column is packed with a chemically bonded porous spherical silica gel having a surface modified with ODS (octadecylsilyl group: C₁₈H₃₇Si) as the stationary phase and having a particle size of 5 µm and has an inner diameter of 4.6 mm and a length of 250 mm. The column is preferably "COSMOSIL 5C₁₈-MS-II" manufactured by Nacalai Tesque, which is used by the inventors of the present invention, and may be a commercially available product equivalent to the column (for example, "COSMOSIL 5C₁₈-AR-II" manufactured by Nacalai Tesque or "Wakosil II-5C₁₈" manufactured by Wako Pure Chemical Industries, Ltd.).

The HPLC apparatus is not particularly limited and a commercially available HPLC apparatus may be used.

The amount of injection is not particularly limited, and the inventors of the present invention inject 10 µL of the sample.

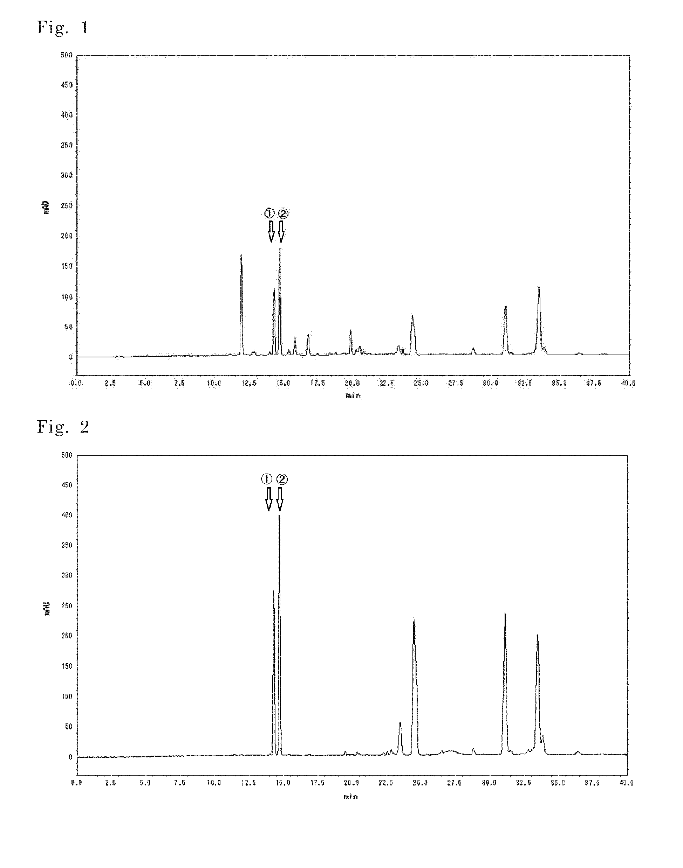

The inventors of the present invention have analyzed an in-house ginger oil produced by a hexane extraction method and a commercially available ginger oil produced by a steam distillation method in the above HPLC conditions and have found that two peaks assigned to neral (also called cis-citral) and geranial (also called trans-citral) are detected around a retention time of 15 minutes in both chromatograms but there are marked differences regarding a peak detected within 5 minutes before the peak of neral and peaks detected within 7 minutes after the peak of geranial. Specifically, the in-house ginger oil produced by a hexane extraction method has one large peak about 3 minutes before the peak of neral and a plurality of peaks between the peak of geranial and about 7 minutes after the peak of geranial, but these peaks are not observed in the chromatogram of the commercially available ginger oil produced by a steam distillation method (see FIG. 1 and FIG. 2).

The inventors of the present invention have further found that the in-house ginger oil produced by a hexane extraction method has a higher masking effect on the unpleasant odor of a fish oil and a higher photooxidation prevention effect (inhibition effect on the increase in peroxide value) than those of the commercially available ginger oil produced by a steam distillation method.

In the HPLC conditions, a signal having an area of at least 1% or more of the peak area of geranial is considered as a peak. The number of the peaks detected within 5 minutes before the peak of neral is at least one and may be two or more. The number is preferably one. The number of the peaks detected within 7 minutes after the peak of geranial is at least three and may be three or more. The number is preferably four, more preferably five, and even more preferably six.

The ginger oil used in the antioxidant of the present invention may be any ginger oil having the peaks defined as above when the HPLC analysis is carried out in the above conditions, and may be produced by any method. Examples of the known method for producing a ginger oil include a steam distillation method, a supercritical carbon dioxide extraction method, and a hexane extraction method.

The ginger oil by the steam distillation method can be produced as follows. For example, a raw material (rhizomes of ginger) is placed in a distillation container, then water vapor is fed into the distillation container, and oil constituents are extracted from the raw material to vaporize together with the water vapor. The water vapor with the oil constituents is cooled to be separated into two layers of an oil layer and a water layer, and the oil is collected. As far as the inventors of the present invention have examined, the ginger oil by the steam distillation method is considered not to fall into the ginger oil having the peaks defined as above.

The ginger oil by the supercritical carbon dioxide extraction method is produced as follows. For example, a raw material (rhizomes of ginger) is placed in an extraction tank, and heated and pressurized CO₂ in a supercritical state is fed into the extraction tank to dissolve oil constituents in the raw material. Next, the pressure of the supercritical CO₂ dissolving the oil constituents is reduced to vaporize CO₂ and the oil is thus collected.

The ginger oil by the hexane extraction method is produced as follows. For example, a raw material (rhizomes of ginger) is placed in a reaction container, and n-hexane is added to come in contact with the raw material. Then, the n-hexane solution is collected, and n-hexane is removed with an apparatus such as a centrifugal thin-film evaporator and a vacuum evaporator. Thus the oil is collected.

When the ginger oil is produced by the hexane extraction method, vegetable ginger or the residue of squeezed ginger can be preferably used as the raw material. The residue of squeezed ginger is more preferred because the residue contains pungent constituents and aromatic constituents of the ginger and has a low water content. The residue of ginger after squeeze is preferably frozen to be stored for improved storage stability. The extraction solvent is preferably n-hexane for easy extraction of the pungent constituents and the aromatic constituents. The extraction is preferably carried out at room temperature or lower.

The oil or fat or the complex lipid applicable to the present invention may be any oil or fat or any complex lipid that contains an unsaturated fatty acid, and examples thereof include an oil or fat or a complex lipid derived from plants, animals, aquatic plants and animals, microorganisms, and other materials. Examples of the complex lipid includes phospholipids (glycerophospholipids, sphingophospholipids), glycolipids (glyceroglycolipids, sphingoglycolipids), lipoproteins, sulfolipids, and ceramides. Specific examples of the oil or fat derived from plants include tung oil, linseed oil, almond oil, perilla oil, olive oil, orange seed oil, pumpkin seed oil, kapok oil, mustard oil, Trichosanthes kirilowii seed oil, Catalpa ovata seed oil, a conjugated linoleic acid-containing oil or fat, Calendula officinalis seed oil, wheat germ oil, rice bran oil, corn oil, sesame oil, cherry seed oil, safflower oil, pomegranate seed oil, Perilla frutescens oil, snakeguard seed oil, soybean oil, tea seed oil, evening primrose seed oil, camellia oil, rapeseed oil, Momordica charantia seed oil, Campsis grandiflora seed oil, balsam apple seed oil, palm oil, sunflower oil, peanut oil, grape seed oil, Impatiens balsamina seed oil, macadamia nut oil, cottonseed oil, and ground nut oil. Specific examples of the complex lipid derived from plants include soybean phospholipid, rapeseed phospholipid, sunflower phospholipid, corn ceramide, rice ceramide, konjak ceramide, wheat ceramide, sugar beet ceramide, and pineapple ceramide. Specific examples of the oil or fat derived from animals include beef tallow, lard, and egg yolk oil. Specific examples of the complex lipid derived from animals include egg yolk phospholipid, sphingomyelins derived from egg yolk and milk, and galactosyl ceramide derived from bovine brain. Specific examples of the oil or fat derived from aquatic animals include fish body oils obtained from sardine, salmon, mackerel, saury, herring, tuna, and other fishes, liver oils of squid and Alaska pollack, an orbital oil of bonito, tuna, and the like, seal oil, and krill oil. Specific examples of the complex lipid derived from aquatic animals include phospholipids obtained from sand eel, salmon roe, and the like. Specific examples of the oil or fat derived from microorganisms include an oil derived from *Schizochytrium* sp., an oil derived from *Nitzschia* sp., an oil derived from *Nannochloris* sp., and an oil derived from *Mortierella* sp. These oils and fats and complex lipids may be used singly or as a mixture. Alternatively, these oils and fats and complex lipids may be hardened, fractionated, or transesterificated and the obtained products may be used singly or as a mixture of two or more of them. An oil or fat containing an unsaturated fatty acid may be mixed with an oil or fat free from an unsaturated fatty acid, and the mixture may be hardened, fractionated, or transesterificated. Preferred are an oil or fat derived from aquatic animals, an oil or fat derived from microorganisms, and various phospholipids.

The antioxidant of the present invention can be added to an oil or fat, a complex lipid, or a composition containing the same and be used. When the antioxidant of the present invention is added to an oil or fat or the like, the antioxidant is preferably, homogeneously mixed with an intended oil or fat or the like. The mixing method is not particularly limited and a known stirrer can be used, for example. The amount of the antioxidant of the present invention is not particularly limited. The antioxidant is preferably added in an amount of about 0.01 to about 25 parts by weight, more preferably about 0.1 to about 15 parts by weight, and even more preferably about 1 to about 10 parts by weight, in terms of ginger oil relative to 100 parts by weight of an oil or fat or a complex lipid.

The antioxidant of the present invention may contain other components in addition to the ginger oil unless the object of the invention is impaired. Examples of the additional component include food additives used in a common edible oil or fat.

The antioxidant of the present invention alone may be added to an oil or fat, a complex lipid, or a composition containing the same, but a higher oxidation prevention effect can be achieved by combination use with an additional antioxidant. Examples of the additional antioxidant specifically include commonly used antioxidants such as tocopherol, L-ascorbic acid, L-ascorbyl palmitate, a rosemary extract, a tea extract, a sunflower extract, and a coffee bean extract.

The antioxidant of the present invention can maintain a clear liquid form at ambient temperature for a long period of time. The antioxidant is preferably stored in a sealed container. The storage temperature is an ambient temperature and is preferably 20°C to 30°C.

The present invention encompasses an oil or fat composition containing the antioxidant of the present invention added thereto and a complex lipid composition containing the antioxidant of the present invention added thereto. Examples of the oil or fat composition include an oil or fat, an emulsion containing an oil or fat, and a solubilized liquid containing an oil or fat. The emulsion may be a micro emulsion, and the solubilized liquid may be a nano emulsion. Examples of the complex lipid composition include a complex lipid, an emulsion containing a complex lipid, and a solubilized liquid containing a complex lipid. The oil or fat composition and the complex lipid composition may contain, in addition to the oil or fat, the complex lipid, and an emulsifier, other components such as a common food additive.

The addition of the antioxidant of the present invention to an oil or fat, a complex lipid, or a composition containing them can more strongly suppress an unpleasant odor caused by the deterioration of the oil or fat and can also more strongly inhibit the increase in peroxide value even in a harsh oxidation condition (for example, continuous irradiation with light at 6, 000 Lux for 14 days, see Example 2) as compared with the ginger oil produced by a steam distillation method. In addition, the ginger oil used in the antioxidant of the present invention contains constituents different from those in the ginger oil produced by a steam distillation method, and thus may be excellent in osteogenesis promoting effect, bone metabolism inhibitory effect, bactericidal effect, immunocyte activation effect, cholesterol lowering effect, carbohydrate and lipid absorption inhibitory effect, fat degradation and burning acceleration effect, nausea or headache inhibitory effect, vasodilating effect, blood circulation promoting effect, and other effects.

### Examples

The present invention will be described in detail with reference to Examples hereinbelow, but the present invention is not limited to them.

### [Example 1: Production and Analysis of Ginger Oil]

### (1) Production of ginger oil by hexane extraction method

At -10°C or lower, 60 kg of residue of squeezed ginger (having a water content of about 75% by mass) was frozen, and the frozen raw material was brought into contact with about a double volume of n-hexane at -5°C for 15 minutes in a reaction container. Then, the n-hexane solution was collected, and n-hexane was removed with a centrifugal thin-film evaporator and a vacuum evaporator at a room temperature or lower, thus affording a ginger oil. The obtained ginger oil (hereinafter referred to as "in-house ginger oil") was a brown transparent oil-soluble liquid having a refreshing aroma of freshly grated ginger and pungent constituents specific to ginger.

### (2) HPLC analysis

The in-house ginger oil was subjected to HPLC analysis in the conditions below. A Shimanto ginger essential oil (trade name, manufactured by ECO-SHIMANTO) produced by a steam distillation method was also subjected to HPLC analysis in the same conditions.

### <Sample preparation>

The in-house ginger oil or the Shimanto ginger essential oil was added to ethanol (guaranteed reagent) so as to give a concentration of 0.1% (w/v) and the obtained sample was analyzed.

### <Apparatus used>

Pump: HITACHI L-2130
Column oven: HITACHI L-2350
Detector: HITACHI L-2450

### <Analysis conditions>

Column: COSMOSIL 5C₁₈-MS-II, 4.6 mm x 250 mm (manufactured by Nacalai Tesque, ODS column)
Column oven temperature: 40°C
Injection amount: 10 µL
Detection wavelength: 228 nm
Mobile phase: water (liquid A), acetonitrile (liquid B) Flow rate: 1 mL/min
Gradient program:
   Initial condition: 70% liquid A/30% liquid B
   0 min to 20 min: linear gradient from the initial condition to 10% liquid A/90% liquid B;
   20 min to 40 min: maintaining 10% liquid A/90% liquid B

FIG. 1 shows the analysis results of the in-house ginger oil, and FIG. 2 shows the analysis results of the Shimanto ginger essential oil. In each HPLC chromatogram, the peaks of neral (1) and geranial (2) were observed around 15 minutes. In the chromatogram of the in-house ginger oil, one large peak was observed about 3 minutes before the peak of neral (1), but such a peak was not observed in that of the Shimanto ginger essential oil. In the chromatogram of the in-house ginger oil, a plurality of peaks were also observed between the peak of geranial (2) and about 7 minutes after the peak of geranial (2), but such peaks were not observed in that of the Shimanto ginger essential oil.

### [Example 2: Study of Photooxidation Inhibitory Effect of Various Ginger Oils on Purified Fish Oil]

### (1) Experimental material

The purified fish oil used was "DD Oil Type 2" (trade name) manufactured by Nippon Suisan. The known antioxidant used was vitamin E ("Tocopherol AT-160 (trade name)" manufactured by J-OIL MILLS). The ginger oil used was two types as below:
(a) in-house ginger oil (Example 1, by the hexane extraction method), and
(b) Shimanto ginger essential oil (trade name, manufactured by ECO-SIMANTO, by the steam distillation method).

### (2) Experimental method

Each sample was prepared in accordance with the formulation ratio shown in Table 1, then 5 g of each sample was placed in a 20-mL bottle, and the bottle was sealed with a cap. The bottle was continuously irradiated with light at 6, 000 Lux. After 7 days and 14 days, each sample was subjected to a peroxide value measurement and a sensory evaluation. The increase in the amount of vitamin E added is known to lower the antioxidant effect, and therefore the formulation ratio was designed as shown in Table 1.

The peroxide value was determined in accordance with "Standard Methods for the Analysis of Fats, Oils and Related Materials (II), reference, 2.4-1996, Peroxide value (chloroform method)" by The Japan Oil Chemists' Society. The sample was dissolved in a titration solvent of chloroform and acetic acid (2:3). To the sample solution, a potassium iodide solution was added while a nitrogen gas stream was passed through the sample solution to remove dissolved oxygen, and free iodine was titrated with 0.01 mol/L sodium thiosulfate solution by potentiometric titration. The peroxide value was calculated based on the amount of the sodium thiosulfate solution used in the titration.

In the sensory evaluation, ten panelists evaluated the direct odor of each sample. A sample with a strong unpleasant odor was evaluated as grade C, a sample with a weak unpleasant odor was evaluated as grade B, and a sample with a masked unpleasant odor was evaluated as grade A. The grade given by the largest number of panelists was regarded as the grade of the sample.

**Table 1**

| | 1 | 2 | 3 | 4 |
|---|---|---|---|---|
| DD Oil Type 2 | 100 parts | 99.5 parts | 95 parts | 95 parts |
| Tocopherol AT-160 | - | 0.5 part | - | - |
| Ginger oil | - | - | 5 parts | - |
| Shimanto ginger essential oil | - | - | - | 5 parts |

Table 2 shows the results. Each of the samples 3 and 4 to which the ginger oil was added inhibited the increase in the peroxide value as compared with the reference sample 1, and the inhibition degree by the in-house ginger oil (a) was higher than that by the Shimanto ginger essential oil (b). In the unpleasant odor masking effect evaluation, (a) had the masking effect, but (b) had a weak unpleasant odor. Vitamin E (Tocopherol AT-160) as a known antioxidant failed to achieve the oxidation prevention effect in the conditions in this Example.

The results revealed that the in-house ginger oil (a) achieved a higher oxidation prevention effect and unpleasant odor masking effect than those of the Shimanto ginger essential oil (b). Thus, the following experiments employed the ginger oil produced by the hexane extraction method or the supercritical carbon dioxide extraction method.

**Table 2**

| | | 1 | 2 | 3 | 4 |
|---|---|---|---|---|---|
| Initial state | Peroxide value (meq/kg) | 0 | 0 | 0 | 0 |
| After 7 days | Peroxide value (meq/kg) | 41.96 | 45.60 | 27.12 | 39.06 |
| | Sensory evaluation | C | C | A | B |
| After 14 days | Peroxide value (meq/kg) | 69.6 | 73.49 | 43.52 | 50.74 |
| | Sensory evaluation | C | C | A | B |

| | | | | | |
|---|---|---|---|---|---|
| <Sensory evaluation> A: An unpleasant odor was masked; B: an unpleasant odor was weak; C: an unpleasant odor was strong. | | | | | |

### [Example 3: Study of Photooxidation Inhibitory Effect on Purified Fish Oil]

The purified fish oil used was "DD Oil Type 2" (trade name) manufactured by Nippon Suisan, the known antioxidant used was "Tocopherol AT-160 (trade name)" manufactured by J-OIL MILLS, and the ginger oil used was the in-house ginger oil produced in Example 1.

Each sample was prepared in accordance with the formulation ratio shown in Table 3. In a similar manner to that in Example 2, 5 g of each sample was placed in a 20-mL bottle, and the bottle was sealed with a cap. The bottle was continuously irradiated with light at 6, 000 Lux. After 7 days and 14 days, each sample was subjected to the peroxide value measurement and the sensory evaluation.

**Table 3**

| | 1 | 2 | 3 | 4 |
|---|---|---|---|---|
| DD Oil Type 2 | 100 parts | 99.5 parts | 95 parts | 99.5 parts |
| Tocopherol AT-160 | - | 0.5 part | - | - |
| Ginger oil | - | - | 5 parts | 0.5 part |

Table 4 shows the results. The sample 3 to which the in-house ginger oil was added had a lower peroxide value than those of the samples 1 and 2 and masked the unpleasant odor. The sample 4 containing the in-house ginger oil in an amount equivalent to that of vitamin E had a lower peroxide value than that with vitamin E and masked the unpleasant odor.

**Table 4**

| | | 1 | 2 | 3 | 4 |
|---|---|---|---|---|---|
| Initial state | Peroxide value | 0 meq/kg | 0 meq/kg | 0 meq/kg | 0 meq/kg |
| After 7 days | Peroxide value | 85.38 meq/kg | 107.39 meq/kg | 42.81 meq/kg | 64.52 meq/kg |
| | Sensory evaluation | C | C | A | A |
| After 14 days | Peroxide value | 119.51 meq/kg | 133.20 meq/kg | 73.25 meq/kg | 92.12 meq/kg |
| | Sensory evaluation | C | C | A | A |

### [Example 4: Study of Thermal Oxidation Inhibitory Effect on Purified Fish Oil]

The same samples were prepared with the same materials as those in Example 3, and each bottle was stored in a thermostatic chamber at 60°C. In a similar manner to that in Example 3, each sample was subjected to the peroxide value measurement and the sensory evaluation after 7 days and 14 days.

Table 5 shows the results. The sample 3 to which the in-house ginger oil was added had a lower peroxide value than those of the samples 1 and 2 and masked the unpleasant odor.

**Table 5**

| | | 1 | 2 | 3 |
|---|---|---|---|---|
| Initial state | Peroxide value | 0 meq/kg | 0 meq/kg | 0 meq/kg |
| After 7 days | Peroxide value | 52.83 meq/kg | 47.22 meq/kg | 30.40 meq/kg |
| | Sensory evaluation | C | C | A |
| After 14 days | Peroxide value | 74.77 meq/kg | 81.42 meq/kg | 41.76 meq/kg |
| | Sensory evaluation | C | C | A |

| | | | | |
|---|---|---|---|---|
| <Sensory evaluation> A: An unpleasant odor was masked; C: an unpleasant odor was strong. | | | | |

### [Example 5: Study of Air Oxidation Inhibitory Effect on Purified Fish Oil]

The same samples were prepared with the same materials as those in Example 3, and each bottle was left without a cap at room temperature (26 ± 2°C). In a similar manner to that in Example 3, each sample was subjected to the peroxide value measurement and the sensory evaluation after 7 days and 14 days.

Table 6 shows the results. The sample 3 to which the in-house ginger oil was added had a lower peroxide value than those of the samples 1 and 2 and masked the unpleasant odor.

**Table 6**

| | | 1 | 2 | 3 |
|---|---|---|---|---|
| Initial state | Peroxide value | 0 meq/kg | 0 meq/kg | 0 meq/kg |
| After 7 days | Peroxide value | 17.75 meq/kg | 13.08 meq/kg | 10.69 meq/kg |
| | Sensory evaluation | C | C | A |
| After 14 days | Peroxide value | 85.62 meq/kg | 84.72 meq/kg | 69.63 meq/kg |
| | Sensory evaluation | C | C | A |

| | | | | |
|---|---|---|---|---|
| <Sensory evaluation> A: An unpleasant odor was masked; C: an unpleasant odor was strong. | | | | |

### [Example 6: Study of Photooxidation Inhibitory Effect on Soybean Sirasimeyu (Soybean Refined Oil)]

The study was carried out in a similar manner to that in Example 3 except that a soybean sirasimeyu (soybean refined oil) (manufactured by Tsuji Oil Mills) was used in place of the purified fish oil.

Table 7 shows the results. The sample 3 to which the in-house ginger oil was added had a lower peroxide value than those of the samples 1 and 2 and masked the unpleasant odor.

**Table 7**

| | | 1 | 2 | 3 |
|---|---|---|---|---|
| After 0 day | Peroxide value | 1.32 meq/kg | 1.32 meq/kg | 1.32 meq/kg |
| After 7 days | Peroxide value | 23.13 meq/kg | 23.96 meq/kg | 13.27 meq/kg |
| | Sensory evaluation | C | C | A |
| After 14 days | Peroxide value | 38.22 meq/kg | 41.94 meq/kg | 26.90 meq/kg |
| | Sensory evaluation | C | C | A |

| | | | | |
|---|---|---|---|---|
| <Sensory evaluation> A: An unpleasant odor was masked; C: an unpleasant odor was strong. | | | | |

### [Example 7: Study of Photooxidation Inhibitory Effect on Corn Sirasimeyu (Cone Refined Oil)]

The study was carried out in a similar manner to that in Example 3 except that a corn sirasimeyu (cone refined oil) (manufactured by Tsuji Oil Mills) was used in place of the purified fish oil.

Table 8 shows the results. The sample 3 to which the in-house ginger oil was added had a lower peroxide value than those of the samples 1 and 2 and masked the unpleasant odor.

**Table 8**

| | | 1 | 2 | 3 |
|---|---|---|---|---|
| After 0 day | Peroxide value | 0.86 meq/kg | 0.86 meq/kg | 0.86 meq/kg |
| After 7 days | Peroxide value | 20.66 meq/kg | 21.83 meq/kg | 13.49 meq/kg |
| | Sensory evaluation | C | C | A |
| After 14 days | Peroxide value | 38.80 meq/kg | 42.02 meq/kg | 25.00 meq/kg |
| | Sensory evaluation | C | C | A |

| | | | | |
|---|---|---|---|---|
| <Sensory evaluation> A: An unpleasant odor was masked; C: an unpleasant odor was strong. | | | | |

### [Example 8: Study of Photooxidation Inhibitory Effect on Cottonseed Oil]

The study was carried out in a similar manner to that in Example 3 except that a cottonseed oil (manufactured by J-OIL MILLS) was used in place of the purified fish oil.

Table 9 shows the results. The sample 3 to which the in-house ginger oil was added had a lower peroxide value than those of the samples 1 and 2 and masked the unpleasant odor.

**Table 9**

| | | 1 | 2 | 3 |
|---|---|---|---|---|
| After 0 day | Peroxide value | 1.47 meq/kg | 1.47 meq/kg | 1.47 meq/kg |
| After 7 days | Peroxide value | 23.15 meq/kg | 23.83 meq/kg | 13.40 meq/kg |
| | Sensory evaluation | C | C | A |
| After 14 days | Peroxide value | 40.81 meq/kg | 40.51 meq/kg | 25.65 meq/kg |
| | Sensory evaluation | C | C | A |

| | | | | |
|---|---|---|---|---|
| <Sensory evaluation> A: An unpleasant odor was masked; C: an unpleasant odor was strong. | | | | |

### [Example 9: Study of Photooxidation Inhibitory Effect on High Linoleic Sunflower Oil]

The study was carried out in a similar manner to that in Example 3 except that a high linoleic sunflower oil (manufactured by J-OIL MILLS) was used in place of the purified fish oil.

Table 10 shows the results. The sample 3 to which the in-house ginger oil was added had a lower peroxide value than those of the samples 1 and 2 and masked the unpleasant odor.

**Table 10**

| | | 1 | 2 | 3 |
|---|---|---|---|---|
| After 0 day | Peroxide value | 0.86 meq/kg | 0.86 meq/kg | 0.86 meq/kg |
| After 7 days | Peroxide value | 21.69 meq/kg | 22.41 meq/kg | 12.96 meq/kg |
| | Sensory evaluation | C | C | A |
| After 14 days | Peroxide value | 39.98 meq/kg | 39.96 meq/kg | 24.39 meq/kg |
| | Sensory | C | C | A |
| | evaluation | | | |

| | | | | |
|---|---|---|---|---|
| <Sensory evaluation> A: An unpleasant odor was masked; C: an unpleasant odor was strong. | | | | |

### [Example 10: Study of Photooxidation Inhibitory Effect on Phospholipid Derived From Salmon Roe]

### (1) Experimental material

The used materials were a medium chain triglyceride oil ("Scholey 64G (trade name)" manufactured by The Nisshin OilliO Group, Ltd., caprylic acid (C8):capric acid (C10) = 60:40), phospholipid derived from salmon roe ("Sunomega PC-DHA (trade name)" manufactured by NOF CORPORATION, vitamin E (see Example 2), and the in-house ginger oil (see Example 1).

### (2) Experimental method

Each sample was prepared in accordance with the formulation ratio shown in Table 11. In a similar manner to that in Example 2, the bottle was continuously irradiated with light at 6,000 Lux. After 7 days and 14 days, each sample was subjected to the peroxide value measurement and the sensory evaluation.

**Table 11**

| | 1 | 2 | 3 |
|---|---|---|---|
| Scholey 64G | 90 parts | 89.955 parts | 89.55 parts |
| Sunomega PC-DHA | 10 parts | 9.995 parts | 9.95 parts |
| Tocopherol AT-160 | - | 0.05 part | - |
| Ginger oil | - | - | 0.5 part |

### (3) Results

Table 12 shows the results. The sample 3 to which the in-house ginger oil was added had a lower peroxide value than those of the samples 1 and 2 and masked the unpleasant odor.

**Table 12**

| | | 1 | 2 | 3 |
|---|---|---|---|---|
| After 0 day | Peroxide value | 0 meq/kg | 0 meq/kg | 0 meq/kg |
| After 7 days | Peroxide value | 4.15 meq/kg | 9.39 meq/kg | 3.18 meq/kg |
| | Sensory evaluation | C | C | A |
| After 14 days | Peroxide value | 9.76 meq/kg | 14.85 meq/kg | 6.95 meq/kg |
| | Sensory evaluation | C | C | A |

| | | | | |
|---|---|---|---|---|
| <Sensory evaluation> A: An unpleasant odor was masked; C: an unpleasant odor was strong. | | | | |

The present invention is not limited to each embodiment and each example described above and can be variously modified within the scope of claims. The technical scope of the present invention encompasses an embodiment obtained by an appropriate combination of different technical means disclosed in respective embodiments.

## Claims

1. An antioxidant for an oil or fat or a complex lipid, the antioxidant comprising a ginger oil, the ginger oil having at least one peak detected within 5 minutes before a peak of neral and having at least three peaks within 7 minutes after a peak of geranial when the ginger oil is subjected to a high-performance liquid chromatographic analysis in the following analysis conditions:
sample: an ethanol containing 0.1% (w/v) of the ginger oil,
column: an ODS column having a particle size of 5 µm, an inner diameter of 4.6 mm, and a length of 250 mm,
column oven temperature: 40°C,
detection wavelength: 228 nm,
mobile phase: water (liquid A), acetonitrile (liquid B),
flow rate: 1 mL/min, and
gradient program:
(1) initial condition: 70% liquid A/30% liquid B;
(2) 0 min to 20 min: linear gradient from the initial condition to 10% liquid A/90% liquid B; and
(3) 20 min to 40 min: maintaining 10% liquid A/90% liquid B.

2. The antioxidant according to claim 1 having a masking action on an unpleasant odor of an oil or fat or a complex lipid.

3. The antioxidant according to claim 1 or 2, wherein the ginger oil is produced by a hexane extraction method.

4. An oil or fat composition comprising the antioxidant according to any one of claims 1 to 3.

5. A complex lipid composition comprising the antioxidant according to any one of claims 1 to 3.

6. A method for preventing oxidation of an oil or fat composition or a complex lipid composition, the method comprising adding the antioxidant according to any one of claims 1 to 3 to an oil or fat composition or a complex lipid composition.

7. The method for preventing oxidation according to claim 6, wherein 0.01 to 25 parts by weight of the ginger oil is added to 100 parts by weight of an oil or fat or a complex lipid.
